# EUROPEAN PATENT SPECIFICATION

(11) **EP 3 418 195 B1**
(45) Date of publication and mention of the grant of the patent: **20.10.2021**
(21) Application number: 17461552.6
(22) Date of filing: 21.06.2017
(51) Int. Cl.: B64D 27/12, B64D 33/04, F01D 25/30, B64D 33/02

(54) **EXHAUST STUB FOR AN AIRCRAFT ENGINE ASSEMBLY**
ABGASSTUTZEN FÜR EINE FLUGZEUGTRIEBWERKBAUGRUPPE
TUBULURE D'ÉCHAPPEMENT POUR ENSEMBLE MOTEUR D'AÉRONEF

(43) Date of publication of application: 26.12.2018
(73) Proprietor: General Electric Company Polska sp. z o.o., 02-256 Warszawa (PL)
(72) Inventor: IGLEWSKI, Tomasz, 02-256 Warszawa (PL)
(74) Representative: Openshaw & Co.

(56) References cited:
- WO-A1-2008/113088
- GB-A- 2 367 592
- US-A- 2 231 239
- US-A1- 2016 304 196
- US-B1- 6 290 173

## Description

### BACKGROUND OF THE INVENTION

Contemporary turbo-prop engine aircraft can include one or more propellers attached to engines of the aircraft. Exhaust gases generated within the engines can be directed outward via exhaust stubs. The exhaust gases' energy and exit direction through the exhaust stubs can provide additional residual thrust to that provided by the propellers.

It can be beneficial to select an exhaust direction that reduces drag on the aircraft while optimizing thrust. However, heat-sensitive components on the aircraft, such as windshields, might be impinged by hot exhaust gases from the stubs.

### BRIEF DESCRIPTION OF THE INVENTION

In one aspect, an aircraft engine assembly comprises an engine having a drive shaft and exhaust collector, a propeller rotationally coupled to the drive shaft and defining a rotational axis, an exhaust stub having an inlet fluidly coupled to the exhaust collector, an exhaust outlet having an outwardly turned tip and a door provided in the exhaust stub such that in flight the door is closed and exhaust gases are directed away from the engine in a first direction forming a first angle with the rotational axis whereas during engine idle the door is open and exhaust gases exit through the door and thus are directed further away from the engine in a second direction forming a second angle with the rotational axis . The exhaust stub can define a centerline, and an inboard portion of the outwardly turned tip can define a concave surface and the outboard portion of the outwardly turned tip can define a convex surface when viewed in a plane containing the centerline. The concave and convex surfaces can have the same radius of curvature, and the outwardly turned tip can extend along less than 20% of the exhaust stub.

The exhaust stub can include a first portion fluidly coupled to the exhaust collector and forming a first angle relative to the rotational axis, as well as a second portion fluidly coupled to the first portion and forming a second angle relative to the rotational axis, with the second angle being less than the first angle. The exhaust stub can also include a turn portion fluidly coupling the first and second portions, and the outwardly turned tip can be provided on the second portion. In addition, the outwardly turned tip when viewed along the rotational axis can lie within a circumferential boundary formed by a full rotation of a tip of the propeller.

The door provided in the exhaust stub can confront the propeller. The door can be biased open by a biasing force, where the biasing force can be less than the force of the propeller wash during flight so that the door is closed during flight, and greater than the force of the propeller wash during idle such that the door is open during idle.

US 2016/0304196 A1 describes an engine installation of vertical take-off and landing aircraft. WO 2008/113088 A1 describes a turboprop engine having a moveable air guide element that provides automatic speed limitation. GB 2,367,592 B describes a thrust nozzle for a gas turbine engine whereby the outlet area of the thrust nozzle can be varied.

The door can form part of an outer wall of the exhaust stub. A biasing device can apply a biasing force to the door to bias the door from the closed to the open position.

In another aspect, a method of exhausting combustion gas from an engine rotating a propeller about a rotational axis comprises providing a door in an exhaust stub, closing the door during flight and exhausting the combustion gas from an exhaust stub directed away from the engine in a first direction forming a first angle relative to the rotational axis and opening the door during idle and exhausting the combustion gas from the exhaust stub directed further away from the engine in a second direction forming a second angle, greater than the first angle relative to the rotational axis.

### BRIEF DESCRIPTION OF THE DRAWINGS

In the drawings:
FIG. 1 is a schematic view of an aircraft including an engine assembly in accordance with various aspects described herein.
FIG. 2 illustrates the engine assembly of FIG. 1 having an exhaust stub in accordance with one unclaimed aspect of the disclosure.
FIG. 3 illustrates a portion of the exhaust stub of FIG. 2.
FIG. 4 illustrates an embodiment of the invention, the exhaust stub of FIG. 2 being equipped with a door in a closed state.
FIG. 5 illustrates an embodiment of the invention, the exhaust stub of FIG. 2 being equipped with a door in an open state.

### DESCRIPTION OF EMBODIMENTS OF THE INVENTION

The described embodiments of the present disclosure are directed to an exhaust stub for an engine. For purposes of illustration, the present disclosure will be described with respect to a turboprop engine for an aircraft. It will be understood, however, that the disclosure is not so limited and may have general applicability in other aircraft engines or in other industrial, commercial, and residential applications.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of the disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary. In addition, "a set" as used herein can include any number of a particular element, including only one.

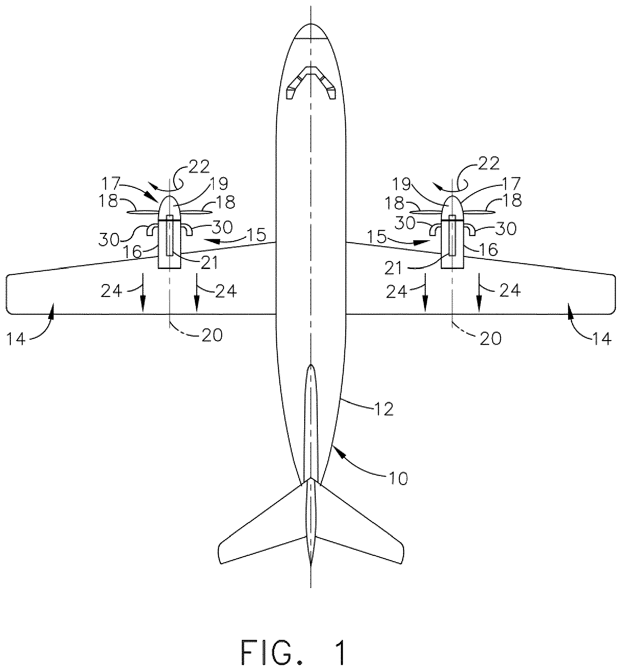

FIG. 1 depicts an aircraft 10 having a fuselage 12 and wings 14 extending outward from the fuselage 12. The aircraft 10 can include at least one engine assembly 15 such as a turbo-prop aircraft engine 16 coupled to the aircraft 10, shown as a set of engines 16 coupled with wings 14. The engine 16 can include a set of propeller assemblies 17 coupled with the engine 16, and including propeller blades 18 and a rotatable hub assembly 19. A drive shaft 21 within the engine 16 can drive the propeller assembly 17 about a propeller assembly rotational axis 20 in a direction indicated by the arrow 22. The propeller blades 18 can further be configured or angled relative to the propeller assembly rotational axis 20 such that the rotation 22 of the propeller blades 18 generates thrust (illustrated as arrow 24) for the aircraft 10. Exhaust stubs 30 can extend outward from the engine 16 to direct exhaust gases away from the engine 16 (or any heat-sensitive components on the fuselage 12 or wings 14) in addition to generating additional thrust for the aircraft 10.

While an aircraft 10 having two turbo-prop engines 16 has been illustrated, embodiments of the disclosure can include any number of engines 16, propeller assemblies 17, or propeller blades 18, or any placement of the engine 16, assemblies 17, or blades 18 relative to the aircraft. Embodiments of the disclosure can further be applied to different aircraft engine types, including, but not limited to, piston-based combustion engines, or electrically-driven engines. Additionally, the rotation 22 of the propeller assemblies 17 or propeller blades 18 is provided for understanding of the embodiments of the disclosure. Embodiments of the disclosure can include alternative directions of rotation 22 of the propeller assemblies 17 or propeller blades 18, or embodiments wherein a set of engines 16 rotate propeller blades 18 in the same or opposing directions.

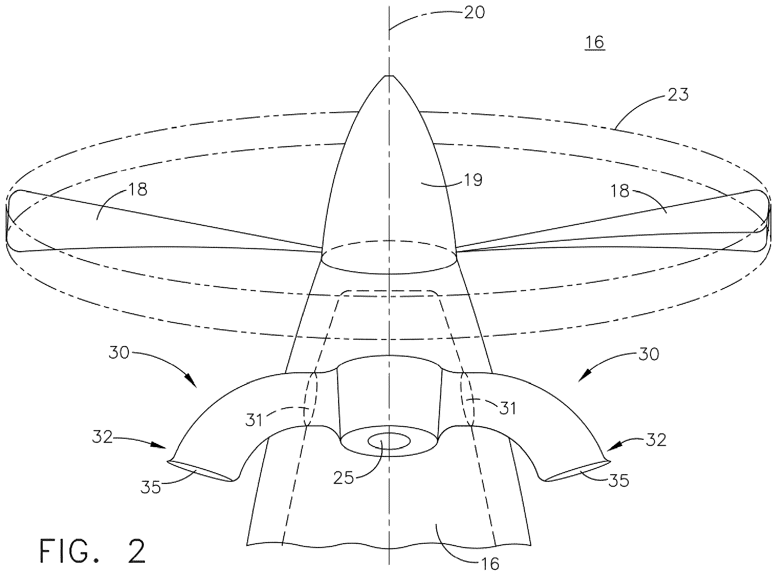

The exhaust stubs 30 can be seen in further detail in FIG. 2. The exhaust stub 3 includes an inlet 31 fluidly coupled to an exhaust collector 25 within the engine 16, as well as an exhaust outlet 32 having a tip 35 which is outwardly turned as shown. The propeller blades 18 can define a circumferential boundary 23 formed by a full rotation of the tips of the blades 18; when viewed in a direction along the rotational axis 20, the exhaust outlet tip 35 can lie within the circumferential boundary 23.

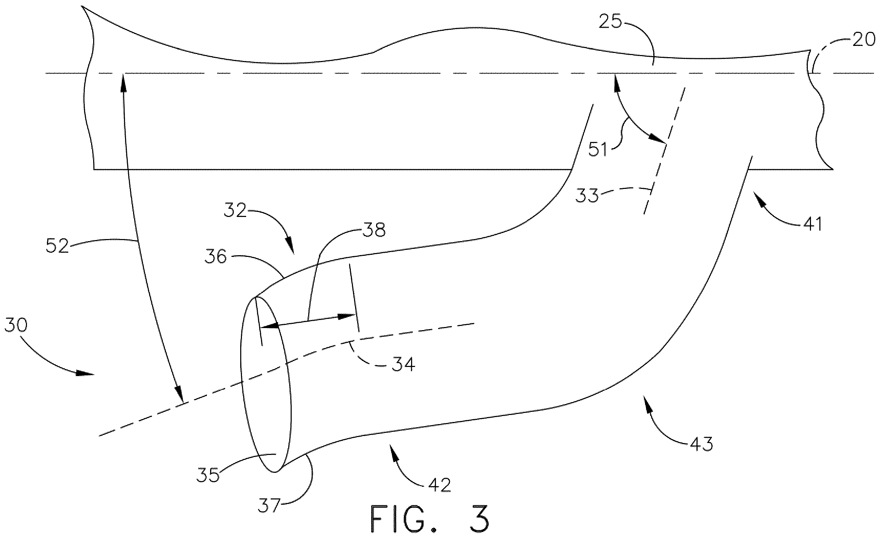

Turning to FIG. 3, exhaust stub 30 can include an inlet centerline 33, outlet centerline 34, first portion 41 fluidly coupled to the exhaust collector 25, and second portion 42 fluidly coupled to the first portion 41. The first portion 41 can include the inlet centerline 33 to form a first angle 51 with the rotational axis 20. The second portion 42 can include the tip 35 and exhaust outlet centerline 34 to form a second angle 52 with the rotational axis 20, and it is contemplated that the second angle 52 can be less than the first angle 51. In addition, a turn portion 43 of the exhaust stub 30 can fluidly couple the first and second portions 41, 42.

The tip 35 of the exhaust stub 30 can further include an inboard portion 36 and outboard portion 37. When viewed in a plane containing the exhaust outlet centerline 34, the inboard portion 36 can define a concave surface while the outboard portion 37 can define a convex surface with respect to the centerline 34. It will be understood that the inboard and outboard portions 36, 37 can have the same or differing radii of curvature, and are illustrated in the example of FIG. 3 as having the same radius of curvature to form the outwardly turned tip 35. In addition, the outwardly turned tip 35 can have a linear extent 38 that can be less than 20% of a length (for example the curvilinear length) of the exhaust stub 30.

In operation, exhaust gases generated within the engine 16 can flow through the exhaust collector 25 and exhaust stub 30 before exiting through the tip 35. The outwardly turned tip 35 can form a pressure gradient with a higher-pressure region near the concave surface of the inboard portion 36 and a lower-pressure region near the convex surface of the outboard portion 37. The pressure gradient at the tip 35 can direct the flow of exhaust gases through the stub 30 toward the outboard portion 37 and away from the engine 16. It is contemplated that the exhaust gases can exit the exhaust stub 30 while forming a larger angle with the rotational axis 20 than the second angle 52.

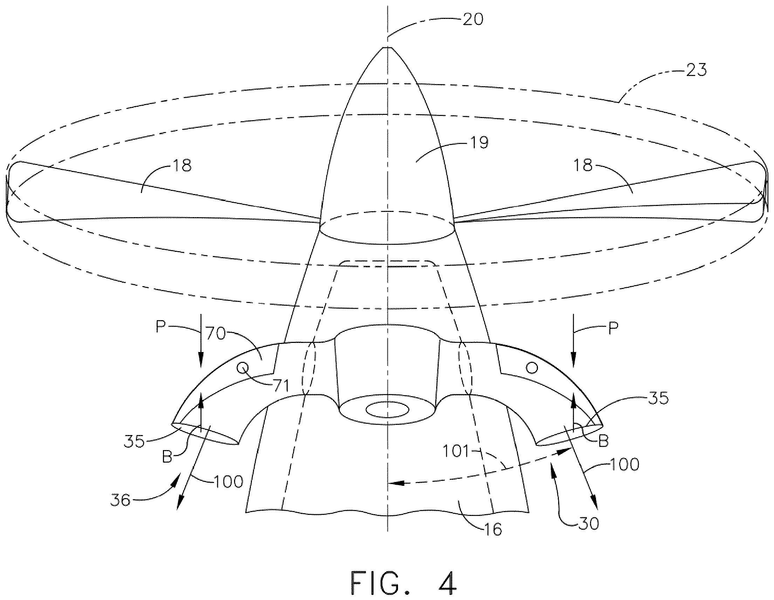

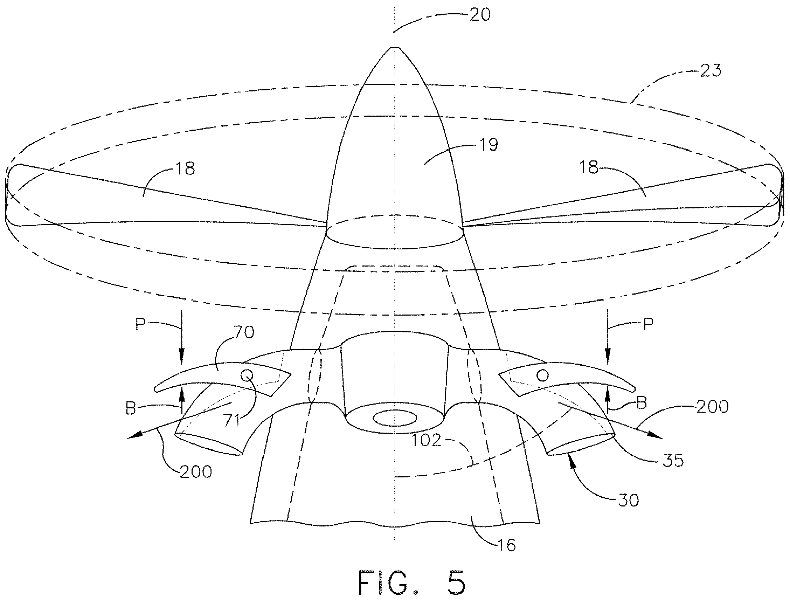

Turning to FIG. 4, the exhaust stub 30 can further include a door 70 confronting the propeller blades 18 and forming part of an outer wall of the stub 30. The door 70 can open and close about a hinge (illustrated as pivot 71), shown in a closed position in FIG. 4 and in an open position in FIG. 5. The door can be biased to an open position by a biasing force indicated by the arrow (B), and it is contemplated that the biasing force (B) can be provided by the external flow, flow of exhaust gases through the stub 30, or by a mechanical actuator as desired.

Airflows generated by the propeller rotation (also known as propeller wash) can exert a force (P) on the door 70 during operation of the engine 16. It can be appreciated that additional forces, including ram drag forces that are dependent on airspeed, can also act on the door 70. In flight, it is contemplated that the propeller wash force (P) can be greater than the biasing force (B) to close the door 70 as seen in FIG. 4. Exhaust gases flowing through the exhaust stub 30 and past the tip 35 can then be directed away from the engine 16 in a direction 100 forming a first angle 101 (FIG. 4) with the rotational axis 20. During engine idle, the propeller wash force (P) can be smaller than the biasing force (B) such that the door 70 can be in an open position as seen in FIG. 5. Exhaust gases can then exit through the door 70 and be directed further away from the engine 16 in a direction 200 (FIG. 5) forming a second angle 102 with the rotational axis 20.

A method of exhausting combustion gas from the engine 16 can include exhausting the combustion gas from the stub 30 at the first angle 101 (FIG. 4) by closing the door 70 during flight, and exhausting the combustion gas from the stub 30 at the second angle 102 (FIG. 5) by opening the door 70 during idle. The method can also include forming a pressure gradient across the exhaust outlet 32 (FIG. 3), including by way of the concave inboard portion 36 and convex outboard portion 37 (FIG. 3).

Aspects in the present disclosure can provide for a variety of benefits. It can be appreciated that hot exhaust gases can impinge heat sensitive components on the fuselage 12 or wings 14, and aspects described in the present disclosure can provide for a reduction in hot gas impingement through use of the door 70 (FIGS. 4-5) or outwardly turned tip 35 (FIG 2). Another benefit is an improvement in air drag, where the contoured tip 35 can provide for exhausting gases in a safer direction by way of the inboard and outboard portions 36, 37 (FIG. 3), and the pressure gradient formed at the tip 35 can increase the exhaust gases' exit angle while allowing the second angle 52 (FIG. 3) to be designed as small as possible for drag reduction and for maximizing residual thrust from the exhaust. Additionally, use of the door 70 can provide for an increased exhaust angle 102 during a stage of operation where minimizing drag is less important for engine efficiency, and can also provide for a reduction in engine overheating during ground operations such as taxiing or parking. A further benefit can be found in the natural biasing force (B) (FIGS. 5-6) provided by the flow of gases through the exhaust stub 30, which can allow for the use of openable/closable doors 70 without complicated actuating mechanisms.

It should be understood that application of the disclosed design is not limited to turboprop engines, but is applicable to turbine and turboshaft engines as well.

This written description uses examples to disclose the invention, including the best mode, and also to enable any person skilled in the art to practice the invention, including making and using any devices or systems and performing any incorporated methods. The patentable scope of the invention is defined by the claims.

### PARTS LIST

- 10: aircraft
- 12: fuselage
- 14: wings
- 15: engine assembly
- 16: engine
- 17: propeller assemblies
- 18: propeller blades
- 19: rotatable hub assembly
- 20: propeller rotation axis
- 21: drive shaft
- 22: rotational direction
- 23: circumferential boundary
- 24: thrust direction
- 25: exhaust port
- 30: exhaust stubs
- 31: inlet
- 32: exhaust outlet
- 33: inlet centerline
- 34: exhaust outlet centerline
- 35: tip
- 36: inboard portion
- 37: outboard portion
- 41: first portion
- 42: second portion
- 43: turn portion
- 51: first angle
- 52: second angle
- 70: door
- 71: pivot
- B: biasing force
- P: propeller wash force
- 100: exhaust direction
- 101: first exit angle
- 102: second exit angle

## Claims

1. An aircraft engine assembly (15) comprising:
an engine (16) having a drive shaft (21) and exhaust collector (25);
a propeller (17) rotationally coupled to the drive shaft (21) and defining a rotational axis (20);
an exhaust stub (30) having an inlet (31) fluidly coupled to the exhaust collector (25) and an exhaust outlet (32) having an outwardly turned tip (35); and
a door (70) provided in the exhaust stub (30) such that in flight the door (70) is closed and exhaust gases are directed away from the engine (16) in a first direction (100) forming a first angle (101) with the rotational axis (20), whereas during engine idle the door (70) is open and exhaust gases exit through the door (70) and thus are directed further away from the engine (16) in a second direction (200) forming a second angle (102) with the rotational axis (20).

2. The aircraft engine assembly (15) of claim 1 wherein the exhaust stub (30) defines a centerline (34) and an inboard portion (36) of the outwardly turned tip (35) defines a concave surface and an outboard portion (37) of the outwardly turned tip (35) defines a convex surface when viewed in a plane containing the centerline (34).

3. The aircraft engine assembly (15) of claim 2 wherein the concave surface and the convex surface have the same radius of curvature.

4. The aircraft engine assembly (15) of claim 1 wherein the outwardly turned tip (35) extends along less than 20% of a length of the exhaust stub (30).

5. The aircraft engine assembly (15) of any preceding claim wherein the exhaust stub (30) comprises a first portion (41) fluidly coupled to the exhaust collector (25) and forming a first angle (51) relative to the rotational axis (20).

6. The aircraft engine assembly (15) of claim 5 wherein the exhaust stub (30) comprises a second portion (42) fluidly coupled to the first portion (41) and forming a second angle (52) relative to the rotational axis (20), with the second angle (52) being less than the first angle (51).

7. The aircraft engine assembly (15) of claim 6 wherein the exhaust stub (30) comprises a turn portion (43) fluidly coupling the first and second portions (41, 42).

8. The aircraft engine assembly (15) of claim 7 wherein the outwardly turned tip (35) is provided on the second portion (42).

9. The aircraft engine assembly (15) of any preceding claim wherein the outwardly turned tip (35), when viewed along the rotational axis (20), lies within a circumferential boundary (23) formed by a full rotation of a tip of the propeller (17).

10. The aircraft engine assembly (15) of claim 1 wherein the door (70) is biased open by a biasing force (B).

11. The aircraft engine assembly (15) of claim 10 wherein the biasing force (B) is less than a force of the propeller wash (P) during flight so that the door (70) is closed during flight.

12. The aircraft engine assembly (15) of claim 11 wherein the biasing force (B) is greater than the force of the propeller wash (P) during idle such that the door (70) is open during idle.

13. The aircraft engine assembly (15) of claim 1 wherein the door (70) confronts the propeller (17).

14. A method of exhausting combustion gas from an engine rotating a propeller about a rotational axis, the method comprising:
providing a door (70) in an exhaust stub (30); closing the door (70) during flight and exhausting the combustion gas from an exhaust stub directed away from the engine (16) in a first direction (100) forming a first angle relative to the rotational axis; and
opening the door (70) during idle and exhausting the combustion gas from the exhaust stub directed further away from the engine (16) in a second direction (200) forming a second angle, greater than the first angle relative to the rotational axis.

## Patentansprüche

1. Luftfahrzeugtriebwerksanordnung (15), umfassend:
ein Triebwerk (16), das eine Antriebswelle (21) und einen Abgassammler (25) aufweist;
einen Propeller (17), der mit der Antriebswelle (21) drehgekoppelt ist und eine Drehachse (20) definiert;
einen Abgasstutzen (30), der einen Einlass (31), der mit dem Abgassammler (25) fluidisch gekoppelt ist, und einen Abgasauslass (32) umfasst, der eine nach außen gewendete Spitze (35) aufweist; und
eine Klappe (70), die in dem Abgasstutzen (30) derart bereitgestellt ist, dass die Klappe (70) im Flug geschlossen ist und Abgase von dem Triebwerk (16) in eine erste Richtung (100) weggerichtet werden, die einen ersten Winkel (101) mit der Drehachse (20) ausbildet, wohingegen während eines Triebwerkleerlaufs die Klappe (70) offen ist und Abgase durch die Klappe (70) austreten und somit von dem Triebwerk (16) in eine zweite Richtung (200) weiter weggerichtet werden, die einen zweiten Winkel (102) mit der Drehachse (20) ausbildet.

2. Luftfahrzeugtriebwerksanordnung (15) nach Anspruch 1, wobei der Abgasstutzen (30) eine Mittellinie (34) definiert und ein innenliegender Abschnitt (36) der nach außen gewendeten Spitze (35) eine konkave Oberfläche definiert und ein außenliegender Abschnitt (37) der nach außen gewendeten Spitze (35) eine konvexe Oberfläche definiert, wenn in einer Ebene betrachtet, die die Mittellinie (34) enthält.

3. Luftfahrzeugtriebwerksanordnung (15) nach Anspruch 2, wobei die konkave Oberfläche und die konvexe Oberfläche denselben Krümmungsradius aufweisen.

4. Luftfahrzeugtriebwerksanordnung (15) nach Anspruch 1, wobei sich die nach außen gewendete Spitze (35) entlang weniger als 20 % einer Länge des Abgasstutzens (30) erstreckt.

5. Luftfahrzeugtriebwerksanordnung (15) nach einem der vorhergehenden Ansprüche, wobei der Abgasstutzen (30) einen ersten Abschnitt (41) umfasst, der mit dem Abgassammler (25) fluidisch gekoppelt ist und einen ersten Winkel (51) relativ zu der Drehachse (20) ausbildet.

6. Luftfahrzeugtriebwerksanordnung (15) nach Anspruch 5, wobei der Abgasstutzen (30) einen zweiten Abschnitt (42) umfasst, der mit dem ersten Abschnitt (41) fluidisch gekoppelt ist und einen zweiten Winkel (52) relativ zu der Drehachse (20) ausbildet, wobei der zweite Winkel (52) kleiner als der erste Winkel (51) ist.

7. Luftfahrzeugtriebwerksanordnung (15) nach Anspruch 6, wobei der Abgasstutzen (30) einen Wendeabschnitt (43) umfasst, der den ersten und den zweiten Abschnitt (41, 42) fluidisch koppelt.

8. Luftfahrzeugtriebwerksanordnung (15) nach Anspruch 7, wobei die nach außen gewendete Spitze (35) auf dem zweiten Abschnitt (42) bereitgestellt ist.

9. Luftfahrzeugtriebwerksanordnung (15) nach einem der vorhergehenden Ansprüche, wobei die nach außen gewendete Spitze (35), wenn entlang der Drehachse (20) betrachtet, innerhalb einer Umfangsgrenze (23) liegt, die durch eine volle Drehung einer Spitze des Propellers (17) ausgebildet wird.

10. Luftfahrzeugtriebwerksanordnung (15) nach Anspruch 1, wobei die Klappe (70) durch eine Vorspannkraft (B) in eine offene Position vorgespannt wird.

11. Luftfahrzeugtriebwerksanordnung (15) nach Anspruch 10, wobei die Vorspannkraft (B) während des Fluges derart geringer als eine Kraft des Propellerstrahls (P) ist, dass die Klappe (70) während des Fluges geschlossen ist.

12. Luftfahrzeugtriebwerksanordnung (15) nach Anspruch 11, wobei die Vorspannkraft (B) während des Leerlaufs derart größer als die Kraft des Propellerstrahls (P) ist, dass die Klappe (70) während des Leerlaufs offen ist.

13. Luftfahrzeugtriebwerksanordnung (15) nach Anspruch 1, wobei die Klappe (70) dem Propeller (17) gegenübersteht.

14. Verfahren zum Ausstoßen von Verbrennungsgas aus einem Triebwerk, das einen Propeller um eine Drehachse dreht, wobei das Verfahren Folgendes umfasst:
Bereitstellen einer Klappe (70) in einem Abgasstutzen (30); Schließen der Klappe (70) während des Fluges und Ausstoßen des Verbrennungsgases aus einem Abgasstutzen von dem Triebwerk (16) in eine erste Richtung (100) weggerichtet, die einen ersten Winkel relativ zu der Drehachse ausbildet; und
Öffnen der Klappe (70) während des Leerlaufs und Ausstoßen des Verbrennungsgases aus dem Abgasstutzen von dem Triebwerk (16) in eine zweite Richtung (200) weiter weggerichtet, die einen zweiten Winkel ausbildet, der größer als der erste Winkel relativ zu der Drehachse ist.

## Revendications

1. Ensemble moteur pour aéronef (15) comprenant :
un moteur (16) ayant un arbre d'entraînement (21) et un collecteur d'échappement (25) ;
une hélice (17) accouplée en rotation à l'arbre d'entraînement (21) et définissant un axe de rotation (20) ;
une buse d'échappement (30) ayant une entrée (31) accouplée fluidiquement au collecteur d'échappement (25) et une sortie d'échappement (32) ayant une pointe tournée vers l'extérieur (35) ; et
une porte (70) prévue dans la buse d'échappement (30) de telle sorte qu'en vol la porte (70) est fermée et les gaz d'échappement sont dirigés à l'écart du moteur (16) dans une première direction (100) formant un premier angle (101) avec l'axe de rotation (20), tandis que pendant le ralenti du moteur, la porte (70) est ouverte et les gaz d'échappement sortent par la porte (70) et sont ainsi dirigés à l'écart du moteur (16) dans une seconde direction (200) formant un second angle (102) avec l'axe de rotation (20).

2. Ensemble moteur pour aéronef (15) selon la revendication 1, la buse d'échappement (30) définissant une ligne médiane (34) et une partie intérieure (36) de la pointe tournée vers l'extérieur (35) définissant une surface concave et une partie extérieure (37) de la pointe tournée vers l'extérieur (35) définissant une surface convexe lorsqu'elle est vue dans un plan contenant la ligne médiane (34).

3. Ensemble moteur pour aéronef (15) selon la revendication 2, la surface concave et la surface convexe ayant le même rayon de courbure.

4. Ensemble moteur pour aéronef (15) selon la revendication 1, la pointe tournée vers l'extérieur (35) s'étendant sur moins de 20 % d'une longueur de la buse d'échappement (30).

5. Ensemble moteur pour aéronef (15) selon l'une quelconque des revendications précédentes, la buse d'échappement (30) comprenant une première partie (41) accouplée fluidiquement au collecteur d'échappement (25) et formant un premier angle (51) par rapport à l'axe de rotation (20).

6. Ensemble moteur pour aéronef (15) selon la revendication 5, la buse d'échappement (30) comprenant une seconde partie (42) accouplée fluidiquement à la première partie (41) et formant un second angle (52) par rapport à l'axe de rotation (20), le second angle (52) étant inférieur au premier angle (51).

7. Ensemble moteur pour aéronef (15) selon la revendication 6, la buse d'échappement (30) comprenant une partie courbe (43) accouplant fluidiquement les première et seconde parties (41, 42).

8. Ensemble moteur pour aéronef (15) selon la revendication 7, la pointe tournée vers l'extérieur (35) étant prévue sur la seconde partie (42).

9. Ensemble moteur pour aéronef (15) selon l'une quelconque des revendications précédentes, la pointe tournée vers l'extérieur (35), lorsqu'elle est vue le long de l'axe de rotation (20), se situant dans les limites d'une limite circonférentielle (23) formée par une rotation complète d'une pointe de l'hélice (17).

10. Ensemble moteur pour aéronef (15) selon la revendication 1, la porte (70) étant sollicitée pour s'ouvrir par une force de sollicitation (B).

11. Ensemble moteur pour aéronef (15) selon la revendication 10, la force de sollicitation (B) étant inférieure à une force du souffle de l'hélice (P) pendant le vol de sorte que la porte (70) est fermée pendant le vol.

12. Ensemble moteur pour aéronef (15) selon la revendication 11, la force de sollicitation (B) étant supérieure à la force du souffle de l'hélice (P) pendant le ralenti de telle sorte que la porte (70) est ouverte pendant le ralenti.

13. Ensemble moteur pour aéronef (15) selon la revendication 1, la porte (70) faisant face à l'hélice (17).

14. Procédé d'évacuation des gaz de combustion d'un moteur faisant tourner une hélice autour d'un axe de rotation, le procédé comprenant :
la fourniture d'une porte (70) dans une buse d'échappement (30) ;
la fermeture de la porte (70) pendant le vol et l'évacuation des gaz de combustion d'une buse d'échappement dirigés à l'écart du moteur (16) dans une première direction (100) formant un premier angle par rapport à l'axe de rotation ; et
l'ouverture de la porte (70) au ralenti et l'évacuation des gaz de combustion de la buse d'échappement dirigés à l'écart du moteur (16) dans une seconde direction (200) formant un second angle, supérieur au premier angle par rapport à l'axe de rotation.
